# EUROPEAN PATENT APPLICATION

(11) **EP 1 672 123 A2**
(43) Date of publication of application: **21.06.2006**
(21) Application number: 06004150.6
(22) Date of filing: 04.02.2002
(51) Int. Cl.: E01F 8/00, E04B 2/74

(54) **Improvements in or relating to a connection and a wedge arrangement**

(30) Priority: 12.02.2001 GB 0103399
(62) Divisional of application: 02710166.6
(71) Applicant: SGB Services Limited, Leatherhead, Surrey KT22 7SG (GB)
(72) Inventor: Black, Mark Jason, Brighton, East Sussex BN2 2YS (GB)
(74) Representative: Parry, Simon James

(57) **Abstract**

A form of connection between a post and a panel is disclosed. The connection is particularly suitable for use in noise-absorbing barriers which are sometimes mounted in position, adjacent a road or a railway, the panels of which are supported on a plurality of spaced-apart posts. The post carries a formation comprising a vertical arcuate wall and a vertical element spaced therefrom presenting a generally cylindrical exterior wall. The centre of the vertical element is substantially coincident with the centre of curvature of the arcuate wall and there is provided an arcuate channel of substantially uniform width between the vertical element and the arcuate wall. A connecting element carries a substantially semi-circular wall which is dimensioned to be received within the channel. Clamping means are mounted on the post and are adapted to engage the semi-circular wall to clamp the panel in position. The clamping means comprises a wedge arrangement. Also disclosed is a wedge arrangement for moving two elements relative to one another, the arrangement comprising a first element and a second element movable relative to one another, the first element carrying a projection and the second element having a bearing surface. A wedge component is provided which is movable with respect to the first and second elements. The wedge component comprises a pair of opposed and diverging bearing edges and an elongate guide located between the bearing edges and at an acute angle to each bearing edge. The guide and projection are configured to engage one another for sliding movement relative to each other as the wedge component is moved relative to the first element.

## Description

**THE PRESENT INVENTION** relates to a connection, and more particularly to a connection between a post and a panel. The present invention also to relates to a wedge arrangement.

There is a requirement for a connection that enables a panel to be supported at selected angles relative to a support post. For example, when noise-absorbing barriers are to be mounted in position, adjacent a road or railway, the panels are typically supported on a plurality of spaced-apart posts. The spaced-apart posts have to follow the line of the road or railway and may thus not be aligned in a linear way. Consequently, whilst some panels may be connected to a support post so that the panels on opposed sides of the support posts are parallel with each other, in many cases the panels will be connected to the support posts in such a way that the panels on opposite sides of the support posts are at specific angles to each other. It is thus desirable to provide an arrangement in which each panel may be connected to each support post in any one of a selected number of orientations.

One aspect of the present invention seeks to provide an arrangement of this type.

There is also a requirement for a clamp arrangement for use in clamping panels to a post in the context of the type of connection mentioned above, and for other applications where a clamp is required. More generally, there is a requirement for an arrangement for moving two elements relative to one another. Another aspect of the present invention, therefore seeks to provide an arrangement of this type.

According to one aspect of this invention there is provided a connection between a post and a panel, the post carrying a formation comprising a vertical arcuate wall and a vertical element spaced therefrom presenting a generally cylindrical exterior wall, the centre of said vertical element being substantially coincident with the centre of curvature of the arcuate wall, an arcuate channel of substantially uniform width being provided between the said vertical element and the said arcuate wall, and a connecting element, the connecting element carrying a substantially semi-circular wall dimensioned to be received within the channel, there being clamping means mounted on the post adapted to engage said semi-circular wall to clamp the panel in position.

Preferably the vertical element presenting a generally cylindrical exterior wall is supported by means of a vertical web extending from one end of the arcuate wall, the said vertical element having a projecting rib located at a position diametrically opposed to said web, the semi-circular wall mounted on the connecting element being provided with inwardly directed lugs at opposed ends thereof.

Conveniently the semi-circular wall of the connecting element is mounted on a plate, means being provided connecting the plate to the panel.

Advantageously the post carries two said formations, each formation being adapted to be associated with a respective connecting element on a respective panel.

The invention also relates to a combination of a post and two panels, the post carrying two formations, each formation comprising a vertical arcuate wall and a vertical element spaced therefrom presenting a generally cylindrical exterior wall, the centre of each said vertical element being substantially coincident with the centre of curvature of the respective arcuate wall, a respective arcuate channel of substantially uniform width being provided between each said vertical element of the associated arcuate wall, each panel carrying a respective connecting element, each connecting element carrying a substantially semi-circular wall dimensioned to be received within a respective channel, there being clamping means mounted on the post adapted to engage said semi-circular walls to clamp the panel in position.

Preferably the clamping means comprises a clamping element mounted on a shaft protruding from the post, the clamping element being movable between a release position in which it does not engage the semi-circular wall, and an engaged position in which it engages the semi-circular wall of each of the connecting elements to clamp the panels in position.

Conveniently the clamping means comprises a pivotally mounted cam element adapted to drive the clamping means to the engaged position. Alternatively the clamping means comprises a wedge adapted to drive the clamping means to the engaged position.

Advantageously the shaft is provided at one end with a lug adapted to be inserted through an aperture formed in the post and to be rotated to engage part of the interior of the post.

Preferably the clamping means comprises:
- a first element protruding from the post; and a clamping element moveable relative to the first element between a release position in which the clamping element does not engage the semi-circular wall and an engaged position in which the clamping element engages the semi-circular wall of each of the connecting elements to clamp the panels in position; the first element carrying a projection and the clamping element having a bearing surface; the clamping means further comprising
- a wedge component moveable with respect to the first element and the clamping element, the wedge component comprising a pair of opposed and diverging bearing edges, and an elongate guide located between the bearing edges and at an acute angle to each bearing edge; the guide and projection being configured to engage each other for sliding movement relative to each other as the wedge component is moved relative to the first element;
the arrangement being such that the wedge component can be oriented with either of its bearing edges bearing against the bearing surface, so that movement of the wedge component relative to the first element drives the projection and bearing surface apart, hence driving the clamping element from the release position to the engaged position.

Conveniently the guide is in the form of an elongate slot configured to receive the projection for sliding movement therein.

Advantageously each bearing edge is substantially straight.

Preferably the guide is substantially coincident with the bisector of the angle between the two bearing edges.

Conveniently the end of the guide nearest to the point of divergence of the bearing edges is configured to allow pivotal movement between the guide and the projection when the projection is located at said end of the guide, and hence allow pivotal movement between the wedge component and the first element.

Advantageously the wedge component has a cam surface in the region of the point of divergence of the bearing edges, the cam surface being configured to bear against the bearing surface and to drive the bearing surface and the projection apart during said pivotal movement between the wedge component and the first element.

Preferably the wedge component and the wedge element are held captive with respect to each other.

Conveniently the first element comprises a body portion having a pair of opposed and substantially planar faces, each face carrying a respective said projection; the wedge component comprising a pair of substantially planar spaced apart plates, each plate having a respective pair of said bearing edges and a respective said guide; the arrangement being such that each projection engages a respective guide.

Advantageously the first element is a shaft and is provided at one end with a lug adapted to be inserted through an aperture formed in the post and to engage part of the interior of the post.

Preferably each vertical element has a protruding rib on the cylindrical exterior wall thereof and the semi-circular wall carries two inwardly directed lugs at opposed ends thereof.

Conveniently the rib and lugs are configured to permit each panel to move, relative to the post, through a predetermined arc.

Advantageously the arc is substantially 135°.

According to another aspect of the present invention, there is provided a wedge arrangement for moving two elements relative to one another, the arrangement comprising:
- a first element and a second element moveable relative to each other, the first element carrying a projection and the second element having a bearing surface; and
- a wedge component moveable with respect to the first and second elements, the wedge component comprising a pair of opposed and diverging bearing edges, and an elongate guide located between the bearing edges and at an acute angle to each bearing edge; the guide and projection being configured to engage each other for sliding movement relative to each other as the wedge component is moved relative to the first element;
the arrangement being such that the wedge component can be oriented with either of its bearing edges bearing against the bearing surface, so that movement of the wedge component relative to the first element drives the projection and bearing surface apart, hence moving the first and second components relative to one another.

Preferably the first element comprises a shaft and the second element is mounted on the first element for sliding movement relative thereto.

In order that the invention may be more readily understood, and so that further features thereof may be appreciated, the invention will now be described, by way of example, with reference to the accompanying drawings in which:
FIGURE 1 is a perspective front view of part of a panel arrangement,
FIGURE 2 is a rear view of the embodiment shown in Figure 1,
FIGURE 3 is an exploded view of part of the support post, and a clamp mechanism,
FIGURE 4 is a side sectional view of the support post, and a clamp mechanism,
FIGURE 5 is a top plan view showing the arrangement of Figure 1 in the position illustrated in Figure 1;
FIGURE 6 is a view corresponding to Figure 5 showing the arrangement of Figure 1 in a different position;
FIGURE 7 is a perspective view of a wedge arrangement which can be used as an alternative clamp mechanism;
FIGURE 8 is a perspective view of part of a support post configured for use with the clamp mechanism of Figure 7;
FIGURE 9 comprises a series of side-sectional views of the wedge arrangement of Figure 7, illustrating the arrangement in a number of alternate positions; and
FIGURE 10 comprises a series of side-sectional views of the wedge arrangement of Figure 7 illustrating the arrangement in a number of different alternate positions.

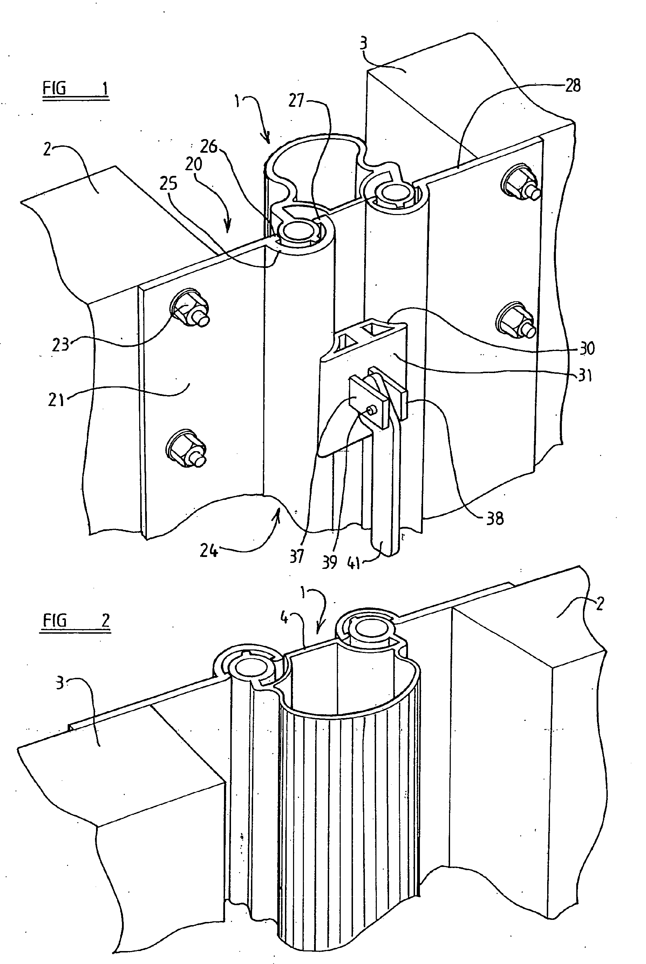

Referring to Figures 1 and 2 of the accompanying drawings, a connection is illustrated between a vertical post 1 and two panels 2, 3. The panels may, for example, be of sound-absorbing material.

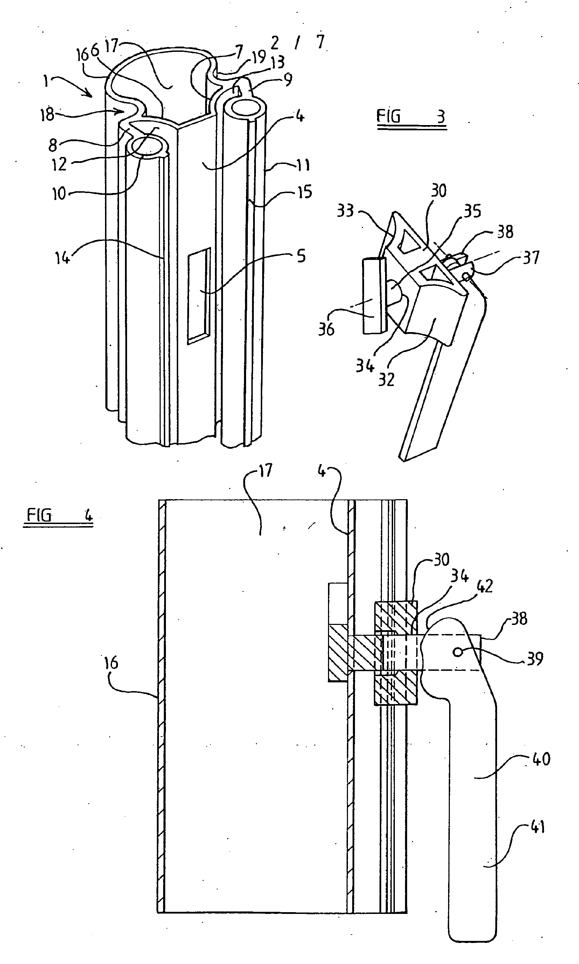

The post 1 may be formed as an extrusion of aluminium or the like. The extrusion is of complex cross-section, but is of symmetrical form. The post 1 is shown most clearly in Figure 3. The post 1 has a planar front face 4. The plane of symmetry of the post is perpendicular to the front face 4. The front face 4 is provided with a plurality of vertically spaced-apart rectangular apertures 5, for a purpose which will become clear hereinafter.

Extended rearwardly and outwardly from the front face 4 are two vertical arcuate walls 6, 7. The walls have approximately 90° of arc and terminate with forwardly and inwardly directed vertical webs 9. The web 8 carries, at its free end, a vertical tubular element 10 and the web 9 carries a corresponding vertical tubular element 11. The tubular element 10 has its centre of radius aligned with the centre of curvature of the arcuate wall 6 so that a channel 12 of arcuate form and of uniform cross-section is defined between the cylindrical outer wall defined by the tubular element 10 and the adjacent face of the arcuate wall 6. Similarly, the tubular element 11 has its centre of radius co-incident with the centre of curvature of the arcuate wall 6 so that a channel 13 of uniform width is established between the exterior of the tubular element 11 and the adjacent arcuate wall 7.

The tubular element 10 carries an axially extending projecting rib 14 on the exterior thereof at a position diametrically opposed to the vertical web 8. The tubular element 11 carries a corresponding rib 15. The rearward surfaces of the arcuate walls 6 and 7 carry a rearwardly directed formation 16 which, together with the arcuate wall 6, 7 and the front wall 4 bound a hollow interior 17 of the post 1. In the embodiment shown, the rearwardly directed portion 16 has two inwardly directed or re-entrant portions 18, 19 which constitute finger-grips. However, the finger grabs are an optional feature.

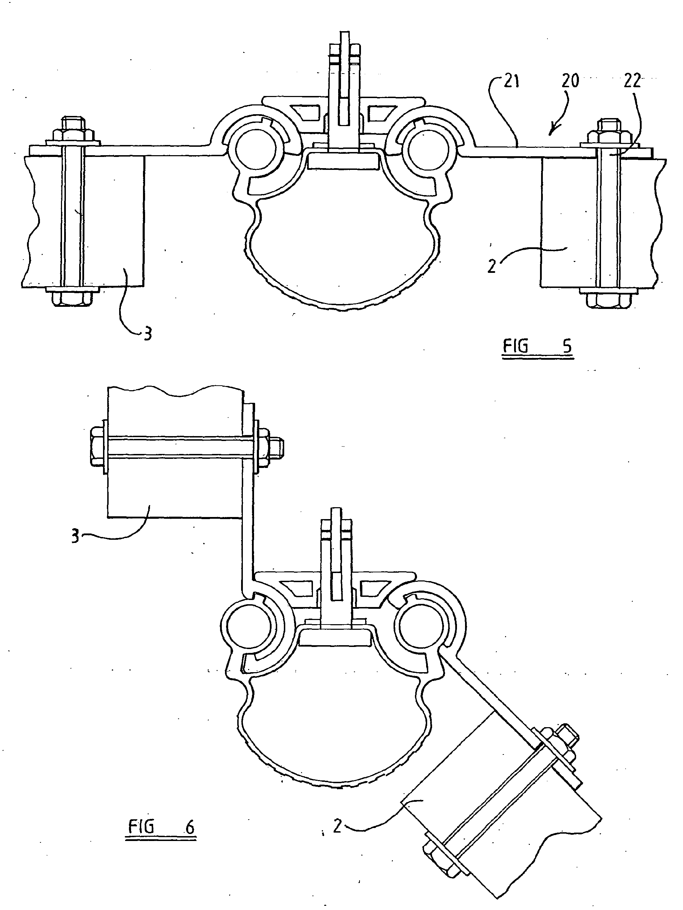

The panel 2 is provided with a mounting element 20. The mounting element 20 comprises a plate 21 provided with apertures 22 (see Figure 5) to receive bolts 23. The plate 21 is connected to the panel 2 by the bolts 23 so that one longitudinal edge of the plate projects beyond the end of the panel 2. That longitudinal edge of the plate 21 carries a formation 24 adapted to engage and co-operate with the formation constituted by the arcuate wall 6 and the tubular element 10 of the post 1 as described above. The formation 24 comprises a vertical semi-circular wall 25 mounted to one surface of the plate 21. The semi-circular wall 25 has an internal radius which is slightly greater than the distance between the centre of radius of the tubular element 10 and the radially outer-most surface of the rib 14. The semi-circular wall 25 has an outer radius which is slightly less than the radius of curvature of the inner surface of the arcuate wall 6. The semi-circular wall 25 carries, at the end adjacent the plate 21, a radially inwardly directed lug 26 and carries, at its opposite end, a radially inwardly directed lug 27. The lug 26 effectively constitutes an extension of the plate 21. The distance between the inner-most ends of the lugs 26, 27 is slightly greater than the diameter of the tubular element 10.

The formation 24 may be engaged with the formation constituted by the arcuate wall 6 and the tubular element 10 simply by offering up the formation 24 to the formation provided on the post 1 with the rib 14 being positioned to enter between the inwardly directed lugs 26, 27. The formation 24 may thus be positioned with the rib 14 adjacent the inner surface of the semi-circular wall 25, and the inwardly directed lugs 26, 27 immediately adjacent the exterior of the tubular element 10. The entire panel 2 may then be rotated about a rotational axis which is coincident with the central axis of the tubular element 10. The lug 27, and the associated part of the arcuate wall 25 may thus be selectively moved into and out of the arcuate channel 12. The angle of movement of the panel above the said axis is limited by positions in which the rib 14 engages one of the lugs 26 or 27.

The panel 3 is provided with a support plate 28 which is equivalent to the support plate 20 as described above, but which is a mirror image thereof, and which is adapted to be engaged with the formation constituted by the arcuate wall 7, and the tubular element 11 present on the post 1.

A clamping element 30 is provided which is preferably formed of an appropriate metal extrusion, the element 30 having a planar outer face 31 and two arcuate generally rearwardly directed faces, each of which has a radius of curvature equal to the exterior radius of curvature of the arcuate wall 25. A bore 34 is provided which passes through the clamping element 30, the bore extending perpendicularly to the front face 31 and passing between the two arcuate faces 32, 33. A shaft 35 passes through the bore. The end of the shaft passing between the arcuate faces 32, 33 carries a locking lug 36. The locking lug 36 is dimensioned to be insertable into the hollow interior 17 of the post 1 through the aperture 5. The lug 36 has a greater length than width so that, when inserted through the aperture, the lug may be rotated within the hollow interior 17 of the post 1 by rotating the shaft 35, thus bringing end portions of the lug into firm engagement with the parts of the arcuate walls 6, 7 that are to the interior of the hollow post 1.

The shaft 35 carries, at its other end, two parallel adjacent support plates 37, 38, and a transverse pin 39 extends between the support plates 37, 38 at a position spaced away from the planar front face 31 of the clamping element 30. Pivotally mounted on the pin 39 is a cam lever 40.

The cam lever 40 may rotate about an axis defined by the pin 39. The cam lever 40 has an elongate handle 41, and a curved cam surface 42 positioned to engage the planar face 31 provided on the clamping element 30.

It is to be understood that in locating a plurality of panels, such as the panels 2, 3, in position, initially a plurality of posts will be located in position with an appropriate spacing. The panels that are to be connected to a particular post 1, such as the panels 2, 3, as shown in the accompanying drawings, will then be offered up to the posts in such a way that the formation, such as the formation 24 on the plate 21, will be brought into engagement with the co-operating formations provided on the post. The clamping elements 30 may then be loosely mounted in position by initially moving the cam lever 40 to such a position that the clamping element 30 is spaced as far as possible from the locking lug 36, and then inserting the locking lug 36 within the aperture 5 and rotating the shaft 35 so that the lug 36 is rotated within the hollow interior 17 of the post 1, so that parts of the lug 36 engage the interior parts of the arcuate walls 6,7 within the hollow interior 17 of the post, this movement bringing the plates 37 and 38 to the condition illustrated in Figure 1 in which they are substantially vertical and the pin 39 extending between them is substantially horizontal. The lever arm 41 may then be moved towards the position shown in Figure 1, which brings part of the cam face 42 into engagement with the front face 31 of the clamping element 30, thus driving the arcuate faces 32, 33 of the clamping element 30 into firm engagement with the exterior of the arcuate wall 25 of the mounting arrangement 20 and the corresponding arcuate wall of the mounting arrangement 28. A plurality of clamping elements 30 will be provided at vertically spaced-apart positions on the post 1, and thus the panels may be firmly connected to the post.

As can be seen in Figure 5, the panels 2 and 3 may be substantially axially aligned, but as can be seen in Figure 6, the panel 3 may be moved so as to extend substantially forwardly of the post, and the panel 2 may be moved to extend rearwardly of the post. Of course, the panels may adopt any desired intermediate position. Thus the panels may each adopt an angle, relative to the post, within a wide range of permissible angles, up to an angle of arc of 135°.

In an alternative embodiment a wedge may be used instead of a cam lever.

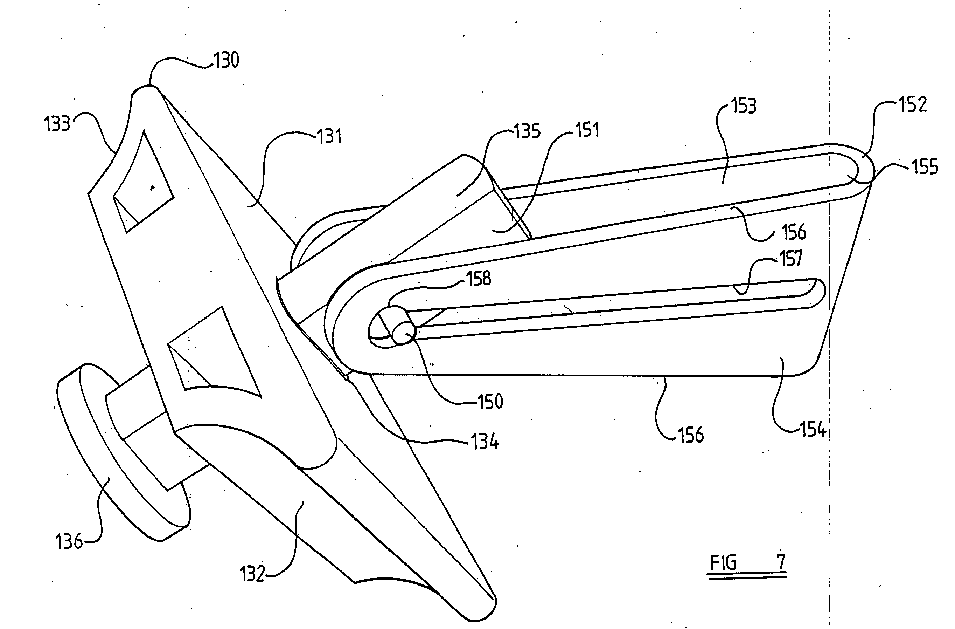

Figure 7 illustrates an alternative type of clamp arrangement which can be used to secure the panels 2, 3 to the post 1. The arrangement illustrated in Figure 7 is a wedge arrangement, and although this arrangement is particularly described herein for use in a clamp, it should be appreciated that the wedge arrangement can have broader application.

The clamp arrangement illustrated in Figure 7, comprises a clamping element 130 of generally identical configuration to the clamping element 30 described hereinabove. The clamping element 130 of the Figure 7 arrangement is again preferably formed of an appropriate metal extrusion and has a generally planar outer face 131 (which, as will become clear, acts a bearing surface) and two arcuate generally rearwardly-directed faces 132, 133, each of which has a radius of curvature equal to the exterior radius of curvature of the arcuate wall 25. A bore 134 is provided which passes through the clamping element 130, the bore 134 extending perpendicularly to the front face 131 and passing between the two arcuate faces 132, 133. A shaft 135 passes through the bore 134. As will be appreciated from Figure 7, the shaft 135 of the Figure 7 arrangement is generally rectangular in cross-section, and the bore 134 is similarly shaped so that the shaft 135 can be received therein as a close sliding fit, but is prevented from rotating within the bore 134.

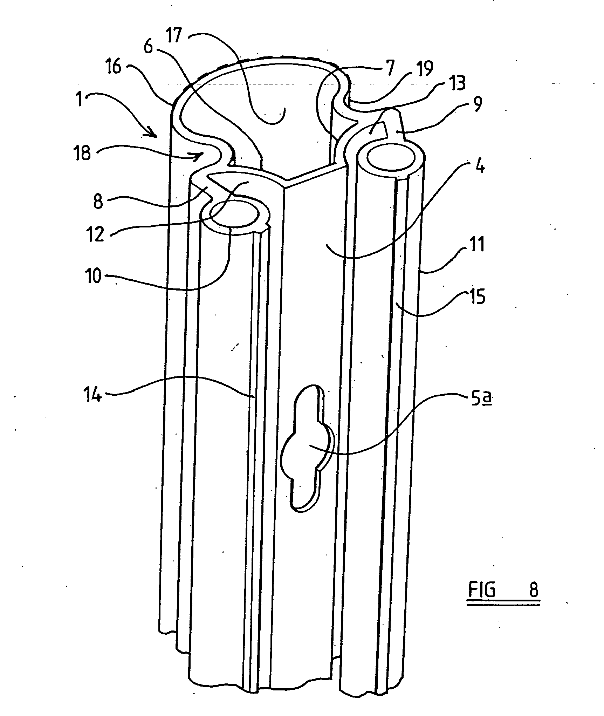

The end of a shaft 135 passing between the arcuate faces 132, 134 carries a locking lug 136. The locking lug 136 of the Figure 7 arrangement takes the form of a generally flat, circular formation. The locking lug 136 is dimensioned to be insertable into the hollow interior 17 of the post 1 through a key-hole type aperture 5a, as illustrated in Figure 8. It will be seen that the key-hole type aperture 5a is generally vertically elongate, and is provided with an enlargened circular centre portion. The lug 136 is sized to be insertable into the aperture 5a in the enlargened centre portion thereof, and once inserted therein, the lug can be moved either vertically upwards or vertically downwards, within the hollow interior 17 of the post 1 so that the lug is brought into engagement with the interior surface of the planar front face 4 of the post, at a position either above or below the enlargened centre portion of the aperture 5a.

At its other end, the shaft 135 is provided with a transverse pin 150, passing through the shaft 135, so as to project outwardly from each opposed flap side face 151 (only one illustrated in Figure 7) of the shaft 135. The pin 150 is fixed with respect to the shaft 135 to prevent removal therefrom. However, it is also envisaged that instead of providing a single pin passing entirely through the shaft 135, the shaft 135 could be provided with a pair of axially-aligned spigots, each spigot projecting from a respective side face 151 of the shaft 135. As will be seen from Figure 7, the pin 150 is circular in cross-section.

The clamp arrangement illustrated in Figure 7 further comprises a wedge component 152. The wedge component 152 comprises a pair of substantially parallel and planar wedge-shaped plates 153, 154. The wedge component 152 is preferably formed from a single sheet of metal, bent at position155.

Each wedge-shaped plate 153, 154 defines a pair of diverging and substantially straight bearing edges 156. Respective bearing edges 156 of each plate 153, 154 are parallel with one another.

Each plate 153, 154 of the wedge component 152 has a substantially straight and elongate slot 157 formed therethrough. The slot 157 at each respective plate 153, 154 is located between the bearing edges 156 of the respective plate, and is oriented at an acute angle to each said bearing edge 156. In the preferred arrangement illustrated, each slot 157 is substantially coincident with the bisector of the angle between the two bearing edges of the respective plate 153, 154.

Each slot 157 is dimensioned to receive, as a sliding fit therein, a respective end of the transverse pin 150. As will become apparent hereinafter, the slots 157 act as guides to a movement of the wedge component 152 relative to the shaft 135.

As will be seen from Figure 7, the wedge component 152 is mounted on the shaft 135 for movement relative thereto, with the shaft 135 being received between the two wedge plates 153, 154 and each end of the pin 150 engaging a respective slot 157. In the preferred embodiment, the wedge component 152 is held captive with respect to the shaft 135.

At the end of each slot 157 nearest to the point of divergence of the bearing edges 156 of each side plate 153, 154, each slot 157 is enlargened slightly to form a generally circular part 158. This allows for easy pivotal movement between the wedge component 152 and the shaft 135.

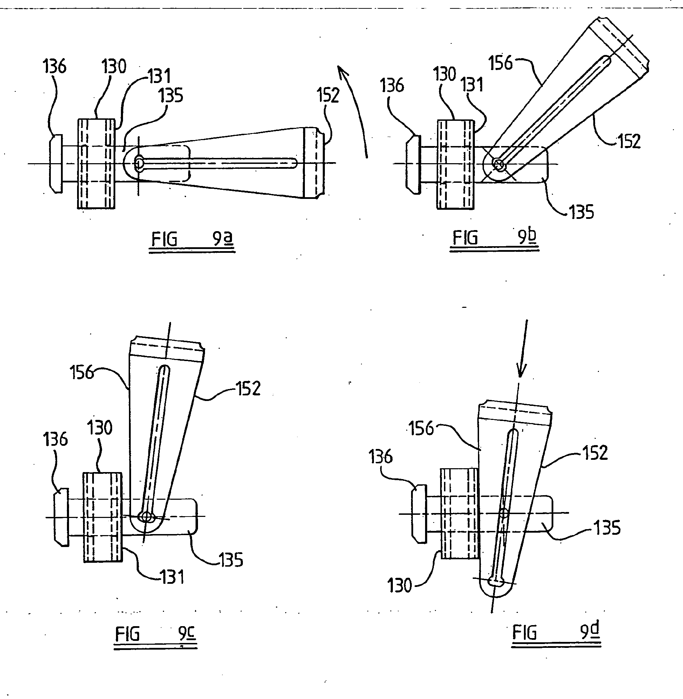

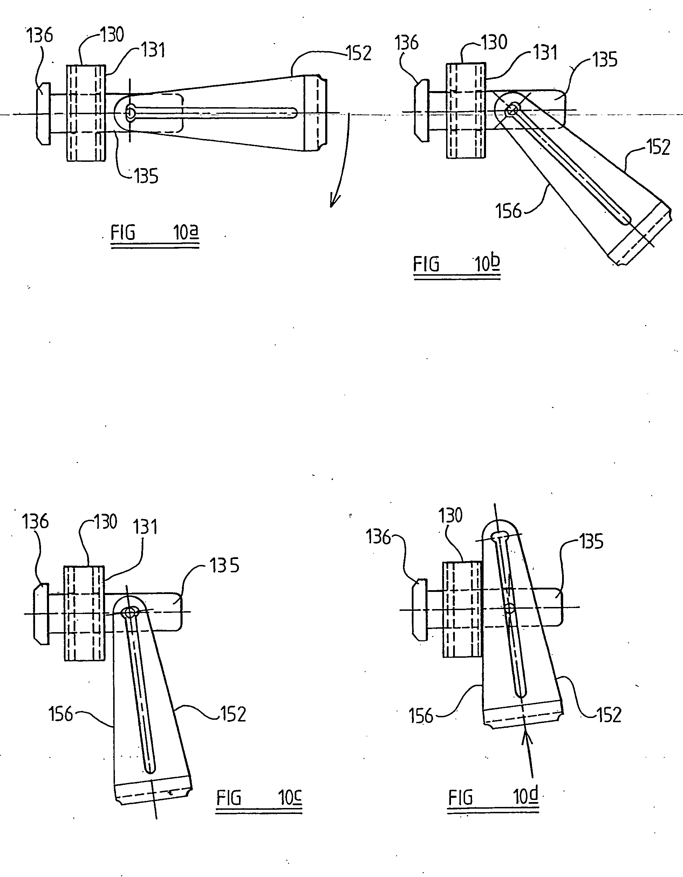

Once a plurality of posts 1 have been located in position with an appropriate spacing therebetween, and a number of panels have been offered up to the posts such that the formation 24 on the plate 21 is brought into engagement with the co-operating formations provided on the post as described previously, each clamping element 130 may then be mounted in position by initially orienting the wedge component 152 such that each end of the pin 150 is received within the enlargened portions 158 of each slot 157, which allows the clamping element 130 to be spaced as far as possible from the locking lug 136. The locking lug 136 can then be inserted within the aperture 5a and the whole clamp arrangement moved, for example, vertically downwardly, so that the lug 136 engages at the interior part of the front wall 4 of the post 1. The wedge component 152 may then be pivoted relative to the shaft 135, about the pin 150, either upwardly relative to the shaft 135 as illustrated in Figures 9a, b, or downwardly relative to the shaft 135 as illustrated in Figures 10a, b. Once the wedge element 152 has been pivoted substantially with respect to the shaft 135, so as to adopt either the position illustrated in Figure 9c, or the position illustrated in Figure 10c, the wedge component 152 can then be moved linearly with respect to the shaft 135 such that the pin 150 is allowed to move longitudinally along each guide slot 157. As illustrated in Figures 9d and 10d, this linear movement of the wedge component 152 relative to the shaft 135 will result in one of the bearing edges 156 of each side plate 153, 154 engaging the outer face 131 (the bearing surface) of the clamping element 130. Further linear movement of the wedge component 152 in the direction indicated by the arrow in Figure 9d or Figure 10d, will, due to the acute angle between the guide slots 157 and the bearing edges 156 drive the clamping element 130 towards the lug 136, such that the arcuate faces 132, 133 are driven into firm engagement with the exterior of the arcuate wall 25 of the mounting arrangement 20 and the corresponding arcuate wall of the mounting arrangement 28. The skilled person will appreciate that there will be significant resistance to further linear movement in the clamping element 152 and the shaft 135, once the bearing edges 156 engage the front face 131 of the clamping element 130, and it is therefore envisaged that to move the wedge component 152 against this resistance, it will be necessary to strike the wider end of the wedge component 152 with a hammer, for example.

In order to release the clamp arrangement illustrated in Figures 7, 9 and 10, it will be appreciated that the wedge component 152 must be moved in the opposite direction to that described above, such that the bearing edges 156 move out of engagement with the front face 131 of the clamping element 130. This movement will also be against a significant resistance and it is envisaged that such movement can be effected simply by striking the narrower end of the wedge component with a hammer.

It is envisaged that the wedge component 152 described above could be modified, in an alternative embodiment, such that the narrower end of the wedge component 152 is configured to provide a camming action similar to that described in connection with the previous clamping arrangement. For example, the wedge component 152 could be modified so as to have a cam surface in the region of the point of divergence of the bearing edges 156 of each plate 153, 154. The cam surface could be configured such the initial pivotal movement of the wedge component 152 relative to the shaft 135, about the pin 150, would urge the cam surface against the front face 131 of the clamping element 130. Thus, the initial pivotal movement of the wedge component 152 would drive the clamping element 130 towards the locking lug 136 by an initial distance, before the subsequent linear movement of the wedge component 152. This would provide a useful "two storage" clamping arrangement.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Features of one or more aspects of the invention are set out in the following list of numbered clauses:
1. A connection between a post and a panel, the post carrying a formation comprising a vertical arcuate wall and a vertical element spaced therefrom presenting a generally cylindrical exterior wall, the centre of said vertical element being substantially coincident with the centre of curvature of the arcuate wall, an arcuate channel of substantially uniform width being provided between the said vertical element and the said arcuate wall, and a connecting element, the connecting element carrying a substantially semi-circular wall dimensioned to be received within the channel, there being clamping means mounted on the post adapted to engage said semi-circular wall to clamp the panel in position.
2. A connection according to clause 1 wherein the vertical element presenting a generally cylindrical exterior wall is supported by means of a vertical web extending from one end of the arcuate wall, the said vertical element having a projecting rib located at a position diametrically opposed to said web, the semi-circular wall mounted on the connecting element being provided with inwardly directed lugs at opposed ends thereof.
3. A connection according to clauses 1 or 2 wherein the semi-circular wall of the connecting element is mounted on a plate, means being provided connecting the plate to the panel.
4. A connection according to any one of the preceding clauses wherein the post carries two said formations, each formation being adapted to be associated with a respective connecting element on a respective panel.
5. A combination of a post and two panels, the post carrying two formations, each formation comprising a vertical arcuate wall and a vertical element spaced therefrom presenting a generally cylindrical exterior wall, the centre of each said vertical element being substantially coincident with the centre of curvature of the respective arcuate wall, a respective arcuate channel of substantially uniform width being provided between each said vertical element of the associated arcuate wall, each panel carrying a respective connecting element, each connecting element carrying a substantially semi-circular wall dimensioned to be received within a respective channel, there being clamping means mounted on the post adapted to engage said semi-circular walls to clamp the panel in position.
6. A combination according to clause 5 wherein the clamping means comprises a clamping element mounted on a shaft protruding from the post, the clamping element being movable between a release position in which it does not engage the semi-circular wall, and an engaged position in which it engages the semi-circular wall of each of the connecting elements to clamp the panels in position.
7. A combination according to clause 6 wherein the clamping means comprises a pivotally mounted cam element adapted to drive the clamping means to the engaged position.
8. A combination according to clause 6 wherein the clamping means comprises a wedge adapted to drive the clamping means to the engaged position.
9. A combination according to any one of clauses 6 to 8, wherein the shaft is provided at one end with a lug adapted to be inserted through an aperture formed in the post and to be rotated to engage part of the interior of the post.
10. A combination according to clause 5, wherein the clamping means comprises:
   - a first element protruding from the post; and a clamping element moveable relative to the first element between a release position in which the clamping element does not engage the semi-circular wall and an engaged position in which the clamping element engages the semi-circular wall of each of the connecting elements to clamp the panels in position; the first element carrying a projection and the clamping element having a bearing surface; the clamping means further comprising
   - a wedge component moveable with respect to the first element and the clamping element, the wedge component comprising a pair of opposed and diverging bearing edges, and an elongate guide located between the bearing edges and at an acute angle to each bearing edge; the guide and projection being configured to engage each other for sliding movement relative to each other as the wedge component is moved relative to the first element;
   the arrangement being such that the wedge component can be oriented with either of its bearing edges bearing against the bearing surface, so that movement of the wedge component relative to the first element drives the projection and bearing surface apart, hence driving the clamping element from the release position to the engaged position.
11. A combination according to clause 10, wherein the guide is in the form of an elongate slot configured to receive the projection for sliding movement therein.
12. A combination according to clause 10 or clause 11, wherein each bearing edge is substantially straight.
13. A combination according to clause 12, wherein the guide is substantially coincident with the bisector of the angle between the two bearing edges.
14. A combination according to any one of clauses 10 to 13, wherein the end of the guide nearest to the point of divergence of the bearing edges is configured to allow pivotal movement between the guide and the projection when the projection is located at said end of the guide, and hence allow pivotal movement between the wedge component and the first element.
15. A combination according to clause 14, wherein the wedge component has a cam surface in the region of the point of divergence of the bearing edges, the cam surface being configured to bear against the bearing surface and to drive the bearing surface and the projection apart during said pivotal movement between the wedge component and the first element.
16. A combination according to any one of clauses 10 to 15, wherein the wedge component and the first element are held captive with respect to each other.
17. A combination according to any one of clauses 10 to 16, wherein the first element comprises a body portion having a pair of opposed and substantially planar faces, each face carrying a respective said projection; the wedge component comprising a pair of substantially planar spaced apart plates, each plate having a respective pair of said bearing edges and a respective said guide; the arrangement being such that each projection engages a respective guide.
18. A combination according to any one of clauses 10 to 17, wherein the first element is a shaft and is provided at one end with a lug adapted to be inserted through an aperture formed in the post and to engage part of the interior of the post.
19. A combination according to any one of clauses 5 to 18 wherein each vertical element has a protruding rib on the cylindrical exterior wall thereof and the semi-circular wall carries two inwardly directed lugs at opposed ends thereof.
20. A combination according to clause 19 wherein the rib and lugs are configured to permit each panel to move, relative to the post, through a predetermined arc.
21. A combination according to clause 20 wherein the arc is substantially 135°.
22. A wedge arrangement for moving two elements relative to one another, the arrangement comprising:
   - a first element and a second element moveable relative to each other, the first element carrying a projection and the second element having a bearing surface; and
   - a wedge component moveable with respect to the first and second elements, the wedge component comprising a pair of opposed and diverging bearing edges, and an elongate guide located between the bearing edges and at an acute angle to each bearing edge; the guide and projection being configured to engage each other for sliding movement relative to each other as the wedge component is moved relative to the first element;
   the arrangement being such that the wedge component can be oriented with either of its bearing edges bearing against the bearing surface, so that movement of the wedge component relative to the first element drives the projection and bearing surface apart, hence moving the first and second components relative to one another.
23. A wedge arrangement according to clause 22, wherein the guide is in the form of an elongate slot configured to receive the projection for sliding movement therein.
24. A wedge arrangement according to clause 22 or clause 23, wherein each bearing edge is substantially straight.
25. A wedge arrangement according to clause 24, wherein the guide is substantially coincident with the bisector of the angle between the two bearing edges.
26. A wedge arrangement according to any one of clauses 22 to 25, wherein the end of the guide nearest to the point of divergence of the bearing edges is configured to allow pivotal movement between the guide and the projection when the projection is located at said end of the guide, and hence allow pivotal movement between the wedge component and the first element.
27. A wedge arrangement according to clause 26, wherein the wedge component has a cam surface in the region of the point of divergence of the bearing edges, the cam surface being configured to bear against the bearing surface and to drive the bearing surface and the projection apart during said pivotal movement between the wedge component and the first element.
28. A wedge arrangement according to any one of clauses 22 to 27, wherein the wedge component and the first element are held captive with respect to each other.
29. A wedge arrangement according to any one of clauses 22 to 28, wherein the first element comprises a body portion having a pair of opposed and substantially planar faces, each face carrying a respective said projection; the wedge component comprising a pair of substantially planar spaced apart plates, each plate having a respective pair of said bearing edges and a respective said guide; the arrangement being such that each projection engages a respective guide.
30. A wedge arrangement according to any one of clauses 22 to 29, wherein the first element comprises a shaft, and the second element is mounted on the first element for sliding movement relative thereto.

## Claims

1. A wedge arrangement for moving two elements relative to one another, the arrangement comprising:
- a first element and a second element moveable relative to each other, the first element carrying a projection and the second element having a bearing surface; and
- a wedge component moveable with respect to the first and second elements, the wedge component comprising a pair of opposed and diverging bearing edges, and an elongate guide located between the bearing edges and at an acute angle to each bearing edge; the guide and projection being configured to engage each other for sliding movement relative to each other as the wedge component is moved relative to the first element;
the arrangement being such that the wedge component can be oriented with either of its bearing edges bearing against the bearing surface, so that movement of the wedge component relative to the first element drives the projection and bearing surface apart, hence moving the first and second elements relative to one another.

2. A wedge arrangement according to claim 1, wherein the guide is in the form of an elongate slot configured to receive the projection for sliding movement therein.

3. A wedge arrangement according to claim 1 or claim 2, wherein each bearing edge is substantially straight.

4. A wedge arrangement according to claim 3, wherein the guide is substantially coincident with the bisector of the angle between the two bearing edges.

5. A wedge arrangement according to any one of claims 1 to 4, wherein the end of the guide nearest to the point of divergence of the bearing edges is configured to allow pivotal movement between the guide and the projection when the projection is located at said end of the guide, and hence allow pivotal movement between the wedge component and the first element.

6. A wedge arrangement according to claim 5, wherein the wedge component has a cam surface in the region of the point of divergence of the bearing edges, the cam surface being configured to bear against the bearing surface and to drive the bearing surface and the projection apart during said pivotal movement between the wedge component and the first element.

7. A wedge arrangement according to any one of claims 1 to 6, wherein the wedge component and the first element are held captive with respect to each other.

8. A wedge arrangement according to any one of claims 1 to 7, wherein the first element comprises a body portion having a pair of opposed and substantially planar faces, each face carrying a respective said projection; the wedge component comprising a pair of substantially planar spaced apart plates, each plate having a respective pair of said bearing edges and a respective said guide; the arrangement being such that each projection engages a respective guide.

9. A wedge arrangement according to any one of claims 1 to 8, wherein the first element comprises a shaft, and the second element is mounted on the first element for sliding movement relative thereto.
